# EUROPEAN PATENT APPLICATION

(11) **EP 3 467 513 A1**
(43) Date of publication of application: **10.04.2019**
(21) Application number: 17194744.3
(22) Date of filing: 04.10.2017
(51) Int. Cl.: G01N 35/04, G01F 23/24

(54) **DETECTOR FOR A LABORATORY LIQUID DISTRIBUTION SYSTEM, DETECTOR SYSTEM FOR A LABORATORY LIQUID DISTRIBUTION SYSTEM, LABORATORY LIQUID DISTRIBUTION SYSTEM, LABORATORY AUTOMATION SYSTEM AND USE OF A DETECTOR**

(71) Applicant: Roche Diagnostics GmbH, 68305 Mannheim (DE); F. Hoffmann-La Roche AG, 4070 Basel (CH)
(72) Inventor: HALDAR, Arindam, 71334 Waiblingen (DE)
(74) Representative: Patentanwälte Ruff, Wilhelm, Beier, Dauster & Partner mbB

(57) **Abstract**

A detector (50) for a laboratory liquid distribution system. Furthermore the application relates to a detector system for a laboratory liquid distribution system comprising such a detector, a laboratory liquid distribution system comprising such a detector and/or such a detector system, a laboratory automation system comprising such a laboratory liquid distribution system and a use of such a detector.

## Description

### TECHNICAL FIELD AND PRIOR ART

The invention relates to a detector for a laboratory liquid distribution system. Furthermore the invention relates to a detector system for a laboratory liquid distribution system comprising such a detector, a laboratory liquid distribution system comprising such a detector and/or such a detector system, a laboratory automation system comprising such a laboratory liquid distribution system and a use of such a detector.

Known laboratory automation systems typically comprise a number of laboratory stations. The laboratory stations may require laboratory liquid containers such as tubes to be open for processing, in particular analyzing, liquids contained in the laboratory liquid containers. Furthermore, the laboratory automation systems typically comprise a laboratory liquid distribution system in order to distribute or to move the liquids contained in the open laboratory liquid containers between the number of laboratory stations. Such a laboratory automation system is shown in document EP 3 073 270 A1.

### SUMMARY OF THE INVENTION

It is the object of the invention to provide a detector for a laboratory liquid distribution system to detect problems of the laboratory liquid distribution system. It is a further object of the invention to provide a detector system comprising such a detector, a laboratory liquid distribution system comprising such a detector and/or such a detector system, a laboratory automation system comprising such a laboratory liquid distribution system and a use of such a detector.

These objects are solved by a detector according to claim 1, a detector system according to claim/s 9 and/or 10, a laboratory liquid distribution system according to claim 11, a laboratory automation system according to claim 14 and a use of a detector according to claim 15. Preferred embodiments are defined in the dependent claims.

The invention relates to a detector for a laboratory liquid distribution system. The detector comprises an electrical sensor. The electrical sensor is adapted to be arranged at a laboratory liquid container within reach of a liquid contained in or by the laboratory liquid container.

Furthermore, the electrical sensor is adapted to generate an electrical sensor signal, when the liquid contacts, in particular directly contacts, the electrical sensor.

The detector enables to detect a displacement or movement, respectively, of the liquid, in particular within the laboratory liquid container. The displacement of the liquid may be caused by a movement or a distribution of the laboratory liquid container in an undesired manner in or by the laboratory liquid distribution system. The undesired movement of the laboratory liquid container may be caused by an irregularity or a fault, respectively, of the laboratory liquid distribution system. Thereby, the detector enables to detect the irregularity of the laboratory liquid distribution system, in particular when and/or where the irregularity occurs.

In particular the displacement of the liquid may be undesired, since in the case of the laboratory liquid container to be open, the liquid may spilled out of the laboratory liquid container. The detector enables to reduce or to prevent a spilling of the liquid contained in the open laboratory liquid container out of the laboratory sample container, in particular during the movement of the open laboratory liquid container by or in the laboratory liquid distribution system. Thereby, contamination of the laboratory liquid distribution system and/or other laboratory liquid containers and/or other liquids may be reduced or prevented. The detector may be denoted as spilling detector. The electrical sensor may be denoted as electrical spilling sensor.

The laboratory liquid container may be designed as a tube and/or may have an opening at an upper and/or top end. The laboratory liquid container may be made of glass or transparent plastic. The liquid may be a laboratory sample such as a blood sample, a urine sample or a chemical sample. The laboratory liquid container may be denoted as laboratory sample container. The laboratory liquid distribution system may be denoted as laboratory sample distribution system. Alternatively the liquid may be a test liquid such as an aqueous salt solution. The laboratory liquid container and its opening, respectively, may be closed by a cap or a closure, respectively. The cap may comprise rubber and/or plastic or may completely consist of rubber and/or plastic. The cap may be embodied as a lid, in particular as a rigid lid, or as a foil, in particular a flexible foil. Typically the liquid will not fill the laboratory liquid container completely, in particular up to the opening, if present.

Arranged at the laboratory liquid container within reach of the liquid may denote, that the electrical sensor may be arranged, such that the liquid does not contact the electrical sensor in a problem-free state of the laboratory liquid container, in particular during the movement of the laboratory liquid container by the laboratory liquid distribution system without any problems. Furthermore, within reach of the liquid may denote, that the electrical sensor may be arranged, such that the liquid may be displaced towards the electrical sensor and may contact the electrical sensor in a problematic state of the laboratory liquid container, in particular during the movement of the laboratory liquid container by the laboratory liquid distribution system with a problem. In particular the electrical sensor may be arranged at the laboratory liquid container, such that the electrical sensor covers an end portion of the laboratory liquid container.

A drop of the liquid contacting the electrical sensor may be sufficient for the electrical sensor to generate the electrical sensor signal. The electrical sensor may be adapted to generate the electrical sensor signal, as soon as the liquid contacts the electrical sensor. Thereby, the detector may enable to detect the moment and/or the place of the irregularity.

According to an embodiment of the invention the electrical sensor is adapted to cover the opening of the laboratory liquid container. Thereby, the detector enables to detect a displacement of the liquid towards the opening. In particular the detector may be arranged in a plane defined by the opening. Additionally or alternatively the detector may be arranged within the laboratory liquid container. The opening does not have to be open.

According to an embodiment of the invention the electrical sensor has a sensing area, in particular an electrical sensing area. The electrical sensor is adapted to generate the electrical sensor signal, when the liquid contacts the sensing area. A size of the sensing area is in the range of 50 square millimeters (mm²) to 400 mm², in particular in the range of 100 mm² to 300 mm², in particular in the range of 150 mm² to 250 mm². This size corresponds to a cross section size of a typical laboratory sample tube. Furthermore, a form of the sensing area may be angled, in particular rectangular, in particular quadratic, or round, in particular circular. In particular the size and/or the form of the sensing area may be adjusted or adapted, respectively, to a size and/or a form of the opening, if present, of the laboratory liquid container.

According to an embodiment of the invention the electrical sensor comprises a pair of exposed electrodes. The pair of exposed electrodes is adapted to be electrically connected by the liquid and to generate the electrical sensor signal, when the liquid contacts the pair of exposed electrodes. This sensor principle allows the electrical sensor to be relatively lightweight. In other words: a maximum distance between the pair of exposed electrodes may be 1000 micrometer (µm), in particular 400 µm. This enables a drop of the liquid having a typical size to electrically connect the pair of exposed electrodes. Exposed may denote, that the liquid may reach and contact the pair of exposed electrodes. In other words: the electrodes may at least partially have no insulation. The liquid in form of a laboratory sample such as a blood sample or the urine sample as well as in the form of a test liquid such as an aqueous salt solution typically is electrically conductive and, thereby, may electrically connect or short-circuit the pair of exposed electrodes.

According to an embodiment of the invention the detector comprises a mount. The mount is adapted to mount the electrical sensor at the laboratory liquid container within reach of the liquid. In particular the mount may be adapted to mount the electrical sensor at the laboratory liquid container by a form fit and a form closure, respectively, and/or by a force fit and a force closure, respectively, and/or by an adhesive bond. The mount may be a mechanical mount such as at least one leg and/or at least one tape.

According to an embodiment of the invention the detector comprises a signal output. The signal output is electrically connected with the electrical sensor and is adapted to output or a detector signal in dependence of or based on the generated electrical sensor signal. In particular the signal output may output the detector signal, as soon as the electrical sensor signal is generated. The signal output does not have to output any detector signal, when no electrical sensor signal is generated. In particular the signal output may convert the electrical sensor signal into the detector signal. The electrical sensor, the signal output and the mount, if present, may be adapted to be, in particular mechanically, connected to only one structural detector unit or may form or be embodied as one structural detector unit.

According to an embodiment of the invention the signal output is embodied as a wireless signal output. The wireless signal output is adapted to output the detector signal as or in form of a wireless detector signal. In particular the wireless signal output may comprise a light source such as a light-emitting diode, wherein the light source may be adapted to output the wireless detector signal as a light signal. The light signal may be received by a light detector such as a camera, in particular a high-speed camera. Additionally or alternatively the wireless signal output may comprise a radio transmitter such as a Bluetooth transmitter, wherein the radio transmitter may be adapted to output the wireless detector signal as a radio signal. The radio signal may be received by a radio receiver such as a Bluetooth receiver.

According to an embodiment of the invention the detector comprises an inertial sensor. The inertial sensor is adapted to be arranged in the region of the laboratory liquid container, in particular at the laboratory liquid container, to cooperate with the electrical sensor and to generate an inertial sensor signal comprising an inertial value in dependence of or based on the generated electrical sensor signal. This enables to find out about the intensity, the grade or the magnitude, respectively, of the irregularity of the laboratory liquid distribution system. In particular the inertial sensor may comprise or be at least one accelerometer and/or at least one gyroscope. Arranged in the region of the laboratory liquid container may denote, that the inertial sensor may be arranged, such that the inertial sensor may experience the same movement, in particular the same acceleration or the same deceleration, as the laboratory liquid container in the laboratory liquid distribution system. The inertial sensor may be adapted to generate the inertial sensor signal, when the electrical sensor signal is generated, in particular as soon as the electrical sensor signal is generated. The inertial sensor signal comprising the inertial value may be output by the signal output, if present, in particular as the detector signal. The electrical sensor, the inertial sensor, the signal output, if present, and the mount, if present, may be adapted to be, in particular mechanically, connected to only one structural detector unit or may form or be embodied as one structural detector unit.

The invention further relates to a detector system for a laboratory liquid distribution system. The detector system comprises a laboratory liquid container containing a liquid and a detector as described above. The electrical sensor is arranged at the laboratory liquid container within reach of the liquid.

By means of the detector according to the invention, the advantages of the detector according to the invention, as discussed above, may be made applicable for the detector system.

In particular the detector may be arranged within the laboratory liquid container. The laboratory liquid container and/or the liquid may be embodied as described above. The laboratory liquid container containing the liquid and the arranged electrical sensor may be denoted as detector container, in particular as spilling detector container.

The invention further relates to a detector system for a laboratory liquid distribution system. The detector system comprises a liquid container carrier. The liquid container carrier is adapted to carry at least one laboratory liquid container containing a liquid. Furthermore, the detector system comprises a detector as described above. The detector is carried by the liquid container carrier.

By means of the detector according to the invention, the advantages of the detector according to the invention, as discussed above, may be made applicable for the detector system.

The liquid container carrier may be denoted as sample container carrier. Carried may denote, that the detector is mounted at the liquid container carrier or even integrated into the liquid container carrier. The liquid container carrier and the detector may be denoted as detector carrier, in particular as spilling detector carrier.

In particular the detector system may comprise the laboratory liquid container containing the liquid, the detector and the liquid container carrier, wherein the laboratory liquid container and the detector may be carried by the liquid container carrier. The laboratory liquid container containing the liquid, the detector and the liquid container carrier may be adapted to be, in particular mechanically, connected to only one structural detector unit or may form or be embodied as one structural detector unit.

The invention further relates to a laboratory liquid distribution system. The laboratory liquid distribution system comprises a number of liquid container carriers (e.g. 1 to 1000), a transport plane, a number of drive elements (e.g. 1 to 10000), a control device and a detector as described above and/or a detector system as described above. Each of the number of liquid container carriers is adapted to carry at least one laboratory liquid container containing a liquid. The transport plane is adapted to support the number of liquid container carriers. The number of drive elements is adapted to move the number of liquid container carriers on the transport plane. The control device is configured to control the number of drive elements, such that the number of liquid container carriers moves on the transport plane along corresponding transport paths.

By means of the detector and/or the detector system according to the invention, the advantages of the detector and/or the detector system according to the invention, as discussed above, may be made applicable for the laboratory liquid distribution system.

The laboratory liquid distribution system and/or its number of liquid container carriers, respectively, may be embodied as described above.

The transport plane may also be denoted as transport surface. The transport plane may support the number of liquid container carriers, what may also be denoted as carrying the number of liquid container carriers. Each of the number of liquid container carriers may be translationally moved on the transport plane. Furthermore, each of the number of liquid container carriers may be adapted to move in two dimensions on the transport plane. Moreover, each of the number of liquid container carriers may slide over the transport plane. Further, each of the number of liquid container carriers may move on the transport plane along an individual transport path, in particular simultaneously.

The number of drive elements may comprise or be formed as a number of wheels driven by a number of corresponding electric motors being located in the number of liquid container carriers and being controllable by the control device.

The control device may comprise or be an integrated circuit, a tablet computer, a smartphone or a computer.

The detector or the detector system enables to detect an irregularity of the laboratory liquid distribution system. In particular the transport plane may comprise a step, a bump or a hole and/or have a different surface friction at different positions, which may cause the irregularity. In dependence of or based on the electrical sensor signal and/or the detector signal and/or the inertial sensor signal the transport plane may be modified or treated in order to reduce or to remove the irregularity. Additionally or alternatively the number of drive elements may accelerate or decelerate the number of laboratory liquid containers in an undesired manner, which may cause the irregularity. In dependence of or based on the electrical sensor signal and/or the detector signal and/or the inertial sensor signal the number of drive elements and/or the control device may be modified or treated in order to reduce or to remove the irregularity.

According to an embodiment of the invention the laboratory liquid distribution system comprises a signal receiver. The signal receiver is adapted to receive the electrical sensor signal and/or the detector signal and/or the inertial sensor signal. The control device is adapted to cooperate with the signal receiver and is configured to control the number of drive elements in dependence of or based on the received electrical sensor signal and/or the received detector signal and/or the received inertial sensor signal. This enables to reduce or to remove an irregularity automatically. In particular the signal receiver may be embodied as a wireless signal receiver. The wireless signal receiver may comprise or be a light detector and/or a radio receiver. In particular the control device may be configured to control the number of drive elements, such that the electrical sensor is not contacted by the liquid furthermore and thereby no further signal is received by the signal receiver.

According to an embodiment of the invention each of the number of liquid container carriers comprises a magnetically active device. The number of drive elements comprises a number of electro-magnetic actuators. The number of electro-magnetic actuators is stationary arranged below the transport plane and is adapted to move the number of liquid container carriers on the transport plane by applying a magnetic drive force to the number of liquid container carriers. The control device is configured to control the number of electro-magnetic actuators, such that the number of liquid container carriers moves on the transport plane along corresponding transport paths.

In particular the magnetically active device may be a permanent magnet or an electro-magnet. Additionally or alternatively the magnetically active device may comprise a magnetically soft material. The number of electro-magnetic actuators may be adapted to generate a magnetic field. The magnetically active device may be adapted to interact with the magnetic field generated by the number of electro-magnetic actuators, such that the magnetic drive force may be applied to a corresponding liquid container carrier. In particular the number of electro-magnetic actuators may be a number of solenoids surrounding a number of ferromagnetic cores. Furthermore, the number of electro-magnetic actuators may be driven or energized individually in order to generate or to provide the magnetic field. Moreover, the electro-magnetic actuators may be arranged in two dimensions, in particular in a grid having rows and columns. Further, the number of electro-magnetic actuators may be arranged in a plane parallel to the transport plane.

The number of electro-magnetic actuators may accelerate or decelerate the number of laboratory liquid containers in an undesired manner, which may cause the irregularity. In dependence of or based on the electrical sensor signal and/or the detector signal and/or the inertial sensor signal the number of electro-magnetic actuators and/or the control device may be modified or treated in order to reduce or to remove the irregularity.

The invention further relates to a laboratory automation system. The laboratory automation system comprises a number of laboratory stations and a laboratory liquid distribution system as described above. The laboratory liquid distribution system is adapted to distribute or to move the number of liquid container carriers and/or laboratory liquid containers and/or the liquid/s, if present, between the laboratory stations.

By means of the laboratory liquid distribution system according to the invention, the advantages of the laboratory liquid distribution system according to the invention, as discussed above, may be made applicable for the laboratory automation system.

The laboratory stations may be arranged adjacent or directly next to the laboratory liquid distribution system, in particular to the transport plane of the laboratory liquid distribution system. The number of laboratory stations may comprise pre-analytical, analytical and/or post-analytical laboratory stations. Pre-analytical laboratory stations may be adapted to perform any kind of pre-processing of liquids, laboratory liquid containers and/or liquid container carriers. Analytical laboratory stations may be adapted to use a liquid or a part of the liquid and a reagent to generate a measuring signal, the measuring signal indicating if and in which concentration, if any, an analyte is existing. Post-analytical laboratory stations may be adapted to perform any kind of post-processing of liquids, laboratory liquid containers and/or liquid container carriers. The pre-analytical, analytical and/or post-analytical laboratory stations may comprise at least one of a decapping station, a recapping station, an aliquot station, a centrifugation station, an archiving station, a pipetting station, a sorting station, a tube type identification station, a liquid quality determining station, an add-on buffer station, a liquid level detection station, a sealing/desealing station, a pushing station, a belt station, a conveying system station and/or a gripper station for moving the laboratory liquid container to or from the liquid container carrier.

The invention further relates to the use of a detector as described above with a laboratory liquid container containing a liquid in a laboratory liquid distribution system.

In other words: the invention may relate to a method to validate the transport or movement function of a laboratory liquid distribution system by using a detector as described above.

### BRIEF DESCRIPTION OF THE DRAWINGS

In the following, an embodiment of the invention will be described in detail with reference to the drawings. Throughout the drawings, the same elements will be denoted by the same reference numerals.
- Fig. 1: shows a perspective view of a detector system according to the invention comprising a detector according to the invention,
- Fig. 2: shows another perspective view of the detector system of Fig. 1,
- Fig. 3: shows a view from below of an electrical sensor of the detector of Fig. 1,
- Fig. 4: shows a perspective view of a laboratory automation system according to the invention comprising a laboratory liquid distribution system according to the invention comprising the detector system of Fig. 1 and
- Fig. 5: shows a longitudinal section view of a liquid container carrier of the laboratory liquid distribution system of Fig. 4 carrying a laboratory liquid container containing a liquid.

### DETAILED DESCRIPTION OF EMBODIMENTS OF THE INVENTION

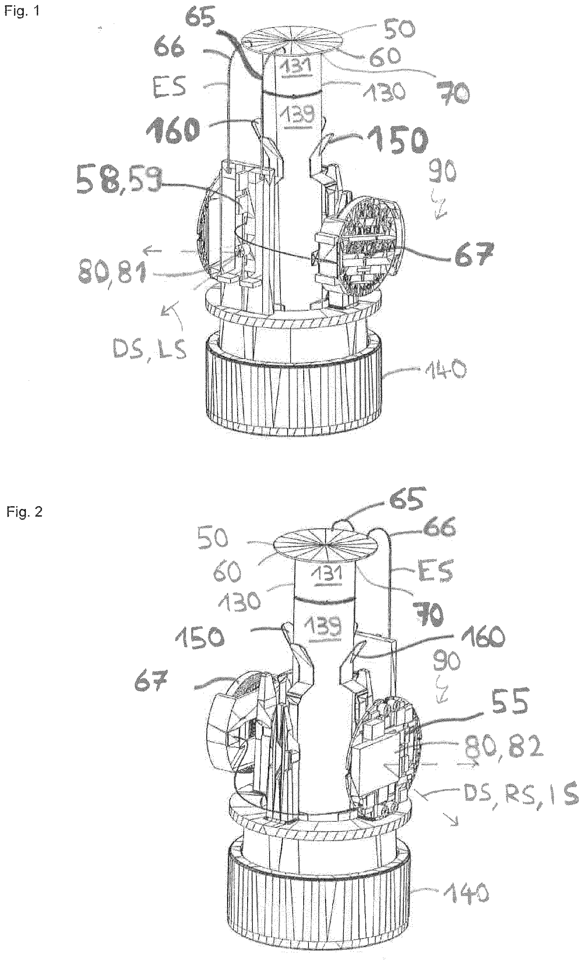

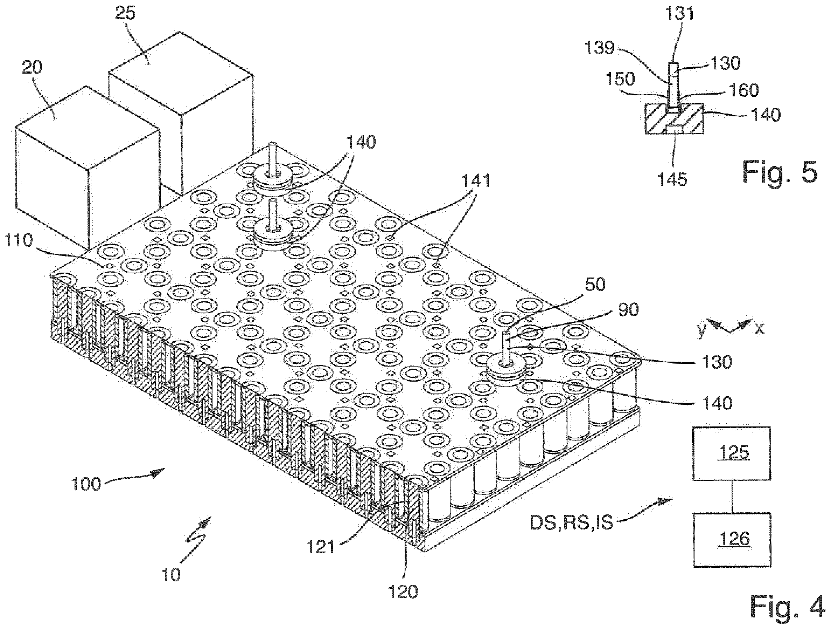

Fig. 1 and 2 show an inventive detector system 90 for a laboratory liquid distribution system 100 as shown in Fig. 4. The detector system 90 comprises an inventive detector 50 for the laboratory liquid distribution system 100. Furthermore, the detector system 90 comprises a laboratory liquid container 130 containing a liquid 139. Moreover, the detector system 90 comprises a liquid container carrier 140. In alternative embodiments the detector system either does not have to comprise the laboratory liquid container containing the liquid or does not have to comprise the liquid container carrier.

The detector 50 comprises an electrical sensor 60. The electrical sensor 60 is adapted to be arranged at the laboratory liquid container 130 within reach of the liquid 139 contained in the laboratory liquid container 130. In the shown embodiment the electrical sensor 60 is arranged at the laboratory liquid container 130 within reach of the liquid 139. Furthermore, the electrical sensor 60 is adapted to generate an electrical sensor signal ES, when the liquid 139 contacts the electrical sensor 60.

The liquid container carrier 140 is adapted to carry the at least one, in the shown embodiment only one, laboratory liquid container 130 containing the liquid 139. In the shown embodiment the liquid container carrier 140 carries the laboratory liquid container 130 containing the liquid 139. Moreover, the detector 50 is carried by the liquid container carrier 140.

In the shown embodiment the laboratory liquid container 130 is designed as a tube and has an opening 131, in particular at an upper end region, as shown in Fig. 1 and 2.

In detail the electrical sensor 60 is adapted to cover the opening 131 of the laboratory liquid container 130. In the shown embodiment the electrical sensor 60 covers the opening 131. Hence, the opening 131 is closed by the electrical sensor 60.

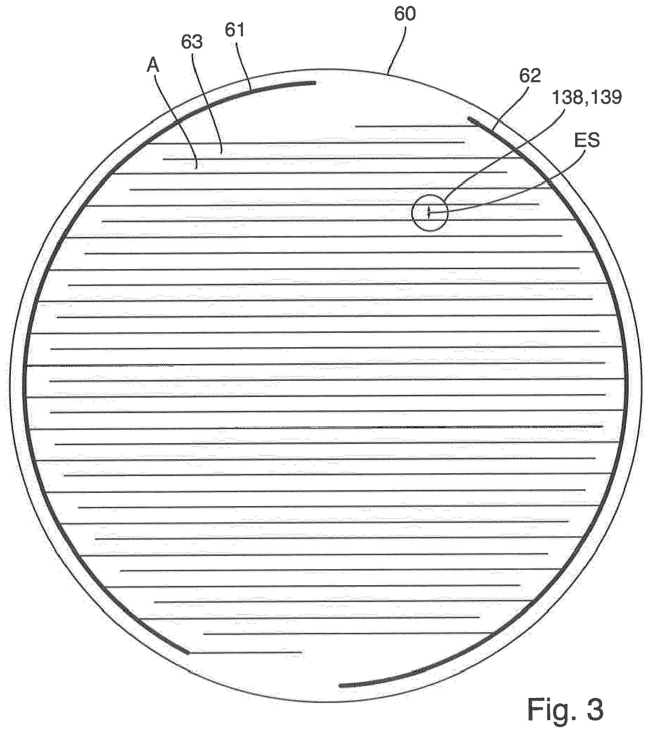

Further, the electrical sensor 60 has a sensing area 63, as shown in Fig. 3. The electrical sensor 60 is adapted to generate the electrical sensor signal ES, when the liquid 139 contacts the sensing area 63. A size A of the sensing area 63 is in the range of 50 mm² to 400 mm², in particular in the range of 100 mm² to 300 mm², in particular in the range of 150 mm² to 250 mm². In the shown embodiment the opening 131 has a diameter of 16.5 mm. The size A of the sensing area 63 corresponds to a cross section size of the laboratory liquid container 130 and its opening 131, respectively. In detail the size A is 214 mm². Furthermore, a form of the sensing area 63 corresponds to a form of the opening 131, namely the form is circular.

Moreover, the electrical sensor 60 comprises a pair of exposed electrodes 61, 62. The pair of exposed electrodes 61, 62 is adapted to be electrically connected by the liquid 139 and to generate the electrical sensor signal ES, when the liquid 139 contacts the pair of exposed electrodes 61, 62.

In the shown embodiment the exposed electrodes 61, 62 each has a comb like structure, which are engaged with each other. The pair of exposed electrodes 61, 62 forms or defines the sensing area 63 and its size A, respectively.

A maximum distance between the pair of exposed electrodes 61, 62, in particular of successive arms of the pair of exposed electrodes 61, 62, is 400 µm. This enables a drop 138 of the, in particular electrically conductive, liquid 139 to electrically connect the pair of exposed electrodes 61, 62. Thereby, the drop 138 contacting the electrical sensor 60 is sufficient for the electrical sensor 60 to generate the electrical sensor signal ES.

In detail an electrical voltage is applied in between the pair of exposed electrodes 61, 62 through wires 65, 66 by an electrical power supply 67 in form of a battery, in particular a coin battery. When the liquid 139 electrically connects the pair of exposed electrodes 61, 62 an electrical current flows through the pair of exposed electrodes 61, 62, which causes or is the electrical sensor signal ES.

Further, the detector 50 comprises a mount 70. The mount 70 is adapted to mount the electrical sensor 60 at the laboratory liquid container 130 within reach of the liquid 139, in the shown embodiment on top of the laboratory liquid container 130 covering the opening 131 by its sensing area 63. In detail the mount 70 is adapted to mount and mounts in the shown embodiment the electrical sensor 60 at the laboratory liquid container 130 by an adhesive bond. In alternative embodiments additionally or alternatively the mount may be adapted to mount the electrical sensor at the laboratory liquid container by a form fit and a form closure, respectively, and/or by a force fit and a force closure, respectively.

Furthermore, the detector 50 comprises a signal output 80. The signal output 80 is electrically connected with the electrical sensor 60 and is adapted to output or a detector signal DS in dependence of the generated electrical sensor signal ES.

In detail the signal output 80 is embodied as a wireless signal output 81, 82. The wireless signal output 81, 82 is adapted to output the detector signal DS as a wireless detector signal LS, RS.

In the shown embodiment the wireless signal output comprises a light source 81 in form of a light-emitting diode, wherein the light source 81 is adapted to output the wireless detector signal as a light signal LS. Additionally the wireless signal output comprises a radio transmitter 82 in form of a Bluetooth transmitter, wherein the radio transmitter 82 is adapted to output the wireless detector signal as a radio signal RS. In alternative embodiments it may be sufficient, if the wireless signal output comprises either the light source or the radio transmitter.

Moreover, the detector 50 comprises an inertial sensor 55 in form of an acceleration and gyro sensor. The inertial sensor 55 is adapted to be arranged in the region of the laboratory liquid container 130, to cooperate with the electrical sensor 60 and to generate an inertial sensor signal IS comprising an inertial value in dependence of the generated electrical sensor signal ES. In the shown embodiment the inertial sensor 55 is carried by the liquid container carrier 140. Further, the detector signal DS, in particular the radio signal RS, comprises or is the inertial sensor signal IS.

In detail the liquid container carrier 140 comprises a number of holding elements 150, 160 for holding the laboratory liquid container 130. The detector 50, in particular its signal output 80 in form of the wireless signal output 81, 82, its electrical power supply 67 and its inertial sensor 55, is mounted at the number of holding elements 150, 160 of the liquid container carrier 140.

In particular the detector 50 comprises a logic 58 on a printed circuit board 59. The logic 58 is in electrical and/or signal connection with the electrical sensor 60, the signal output 80, the inertial sensor 55 and the power supply 67. Furthermore, the logic 58 and the printed circuit board 59 are carried by the liquid container carrier 140. In detail the logic 58 and the printed circuit board 59 are mounted at the number of holding elements 150, 160 of the liquid container carrier 140.

Fig. 4 shows an inventive laboratory automation system 10 comprising the inventive laboratory liquid distribution system 100. The laboratory liquid distribution system 100 comprises a number of liquid container carriers 140, a transport plane 110, a number, in the shown embodiment a plurality, of drive elements 120, a control device 125 and the detector system 90 comprising the detector 50. In alternative embodiments it may be sufficient, if the laboratory liquid distribution system does not comprise the whole detector system but only its detector. Each of the number of liquid container carriers 140 is adapted to carry at least one, in the shown embodiment only one, laboratory liquid container 130 containing a liquid 139. The transport plane 110 is adapted to support the number of liquid container carriers 140. The number of drive elements 120 is adapted to move the number of liquid container carriers 140 on the transport plane 110. The control device 125 is configured to control the number of drive elements 120, such that the number of liquid container carriers 140 moves on the transport plane 110 along corresponding transport paths, in particular each of the liquid container carriers 140 along an individual transport path simultaneously.

In detail the number of liquid container carriers 140 can be translationally moved in two dimensions x, y being perpendicular to each other on or over the transport plane 110. In the shown embodiment each of the number of liquid container carriers 140 comprises a sliding surface, wherein the sliding surface is adapted to be in contact with the transport plane 110 and enables performing movements, in particular slides, of the corresponding liquid container carrier 140 on the transport plane 110. In particular the laboratory liquid distribution system 100 comprises a plurality of liquid container carriers 140. Self-evidently, more than the three liquid container carriers 140 depicted in Fig. 4 may be comprised in the laboratory liquid distribution system 100. One of the liquid container carriers 140 carries the detector 50 and is part of the detector system 90.

In the shown embodiment each of the number of liquid container carriers 140 comprises a magnetically active device 145, as shown in Fig. 5. The number of drive elements 120 comprises a number, in the shown embodiment a plurality, of electro-magnetic actuators 121. The number of electro-magnetic actuators 121 is stationary arranged below the transport plane 110 and is adapted to move the number of liquid container carriers 140 on the transport plane 110 by applying a magnetic drive force to the number of liquid container carriers 140. The control device 125 is configured to control the number of electro-magnetic actuators 121, such that the number of liquid container carriers 140 moves on the transport plane 110 along corresponding transport paths. In alternative embodiments the number of drive elements may comprise or be formed as a number of wheels driven by a number of corresponding electric motors being located in the number of liquid container carriers and being controllable by the control device.

In the shown embodiment the magnetically active device 145 is a permanent magnet. The number of electro-magnetic actuators 121 is adapted to generate a magnetic field. The magnetically active device 145 is adapted to interact with the magnetic field generated by the number of electro-magnetic actuators 121, such that the magnetic drive force is applied to a corresponding liquid container carrier 140. The number of electro-magnetic actuators 121 is implemented as a number of solenoids each having a solid ferromagnetic core. The electro-magnetic actuators 121 are quadratically arranged in a grid having rows and columns, in particular in a plane parallel to the transport plane 110. In each center of a quadrat formed by corresponding electro-magnetic actuators 121 no electro-magnetic actuator is arranged. In other words: in each second row in each second position there is no electro-magnetic actuator 121. Additionally the electro-magnetic actuators 121 can be driven individually, in particular by the control device 125, in order to generate the magnetic field.

Furthermore, the laboratory liquid distribution system 100 comprises a number, in the shown embodiment a plurality, of Hall-sensors 141. The number of Hall-sensors 141 is arranged, such that a position of a respective liquid container carrier 140 on the transport plane 140 can be sensed. The control device 125 is functionally coupled to the Hall-sensors 141 for sensing the position of a respective liquid container carrier 140. The control device 125 is configured to control the number of electro-magnetic actuators 121 in response to the sensed position/s.

Moreover, the laboratory automation system 10 comprises a number of laboratory stations 20, 25. The laboratory liquid distribution system 100 is adapted to distribute the number of liquid container carriers 140 and/or the, in particular open, laboratory liquid containers 130 and/or the liquid/s 139 between the laboratory stations 20, 25.

The number of laboratory stations 20, 25 may comprise at least one pre-analytical, analytical and/or post-analytical station. In the shown embodiment the laboratory stations 20, 25 are arranged adjacent to the laboratory liquid distribution system 100 and its transport plane 110, respectively. Self-evidently, more than the two laboratory stations 20, 25 depicted in Fig. 4 may be comprised in the laboratory automation system 10.

The number of laboratory stations 20, 25 requires the laboratory liquid containers 130 to be open for processing, in particular analyzing, the liquid 139 contained in the corresponding laboratory liquid container 130. Thereby, an undesired displacement of the liquid 139 within the corresponding laboratory liquid container 130 may cause an undesired spilling out of the open laboratory liquid container 130, in particular during the movement of the open laboratory liquid container 130 by the laboratory liquid distribution system 100 with a problem.

The detector system 90 and its detector 50, respectively, enable to reduce or to prevent a spilling.

In detail the detector system 90 with its detector 50 is moved by its liquid container carrier 140 on the transport plane 110 by the number of drive elements 120.

The liquid 139 does not fill the laboratory liquid container 130 completely, in particular up to the opening 131, as shown in Fig. 1 and 2. Hence, in a problem-free state of the laboratory liquid container 130 the liquid 139 does not contact the electrical sensor 60, in particular during the movement of the laboratory liquid container 130 by the laboratory liquid distribution system 100 without any problems.

In a problematic state of the laboratory liquid container 130 the liquid 139 is displaced towards the electrical sensor 60 and contacts the electrical sensor 60, in particular during the movement of the laboratory liquid container 130 by the laboratory liquid distribution system 100 with a problem. The displacement of the liquid 139 may be caused by an irregularity of the laboratory liquid distribution system 100.

The detector system 90 and its detector 50, respectively, enable to detect the irregularity, in particular when and/or where the irregularity occurs.

When the electrical sensor signal ES is generated, the wireless detector signal DS in form of the light signal LS is output. The light signal LS may be received by a light detector.

Additionally, when the electrical sensor signal ES is generated, the wireless detector signal DS in form of the radio signal RS comprising the inertial sensor signal IS is output.

The laboratory liquid distribution system 100 comprises a signal receiver 126 in form of a wireless signal receiver, in particular a radio receiver such as a Bluetooth receiver. The signal receiver 126 is adapted to receive the detector signal DS comprising the inertial sensor signal IS. The control device 125 is adapted to cooperate with the signal receiver 126 and is configured to control the number of drive elements 120 in dependence of the received detector signal DS comprising the inertial sensor signal IS. In particular the control device 125 is configured to control the number of drive elements 120, such that the electrical sensor 60 is not contacted by the liquid 139 furthermore and thereby no further signal DS, RS, IS is received by the signal receiver 126.

As the shown and above discussed embodiments reveal, the invention provides a detector for a laboratory liquid distribution system to detect problems of the laboratory liquid distribution system. Furthermore, the invention provides a detector system comprising such a detector, a laboratory liquid distribution system comprising such a detector and/or such a detector system, a laboratory automation system comprising such a laboratory liquid distribution system and a use of such a detector with a laboratory liquid container containing a liquid in a laboratory liquid distribution system.

## Claims

1. Detector (50) for a laboratory liquid distribution system (100), the detector (50) comprising:
- an electrical sensor (60),
- wherein the electrical sensor (60) is adapted to be arranged at a laboratory liquid container (130) within reach of a liquid (139) contained in the laboratory liquid container (130), and
- wherein the electrical sensor (60) is adapted to generate an electrical sensor signal (ES), when the liquid (139) contacts the electrical sensor (60).

2. Detector (50) according to claim 1,
- wherein the electrical sensor (60) is adapted to cover an opening (131) of the laboratory liquid container (130).

3. Detector (50) according to any one of the preceding claims,
- wherein the electrical sensor (60) has a sensing area (63), wherein the electrical sensor (60) is adapted to generate the electrical sensor signal (ES), when the liquid (139) contacts the sensing area (63), wherein a size (A) of the sensing area (63) is in the range of 50 mm² to 400 mm².

4. Detector (50) according to any one of the preceding claims,
- wherein the electrical sensor (60) comprises a pair of exposed electrodes (61, 62), wherein the pair of exposed electrodes (61, 62) is adapted to be electrically connected by the liquid (139) and to generate the electrical sensor signal (ES), when the liquid (139) contacts the pair of exposed electrodes (61, 62).

5. Detector (50) according to any one of the preceding claims, comprising:
- a mount (70), wherein the mount (70) is adapted to mount the electrical sensor (60) at the laboratory liquid container (130) within reach of the liquid (139).

6. Detector (50) according to any one of the preceding claims, comprising:
- a signal output (80), wherein the signal output (80) is electrically connected with the electrical sensor (60) and is adapted to output a detector signal (DS) in dependence of the generated electrical sensor signal (ES).

7. Detector (50) according to claim 6,
- wherein the signal output (80) is embodied as a wireless signal output (81, 82), wherein the wireless signal output (81, 82) is adapted to output the detector signal (DS) as a wireless detector signal (LS, RS).

8. Detector (50) according to any one of the preceding claims, comprising:
- an inertial sensor (55), wherein the inertial sensor (55) is adapted to be arranged in the region of the laboratory liquid container (130), to cooperate with the electrical sensor (60) and to generate an inertial sensor signal (IS) comprising an inertial value in dependence of the generated electrical sensor signal (ES).

9. Detector system (90) for a laboratory liquid distribution system (100), comprising:
- a laboratory liquid container (130) containing a liquid (139) and
- a detector (50) according to any one of the preceding claims, wherein the electrical sensor (60) is arranged at the laboratory liquid container (130) within reach of the liquid (139).

10. Detector system (90) for a laboratory liquid distribution system (100), comprising:
- a liquid container carrier (140), wherein the liquid container carrier (140) is adapted to carry at least one laboratory liquid container (130) containing a liquid (139), and
- a detector (50) according to any one of claims 1 to 8, wherein the detector (50) is carried by the liquid container carrier (140).

11. Laboratory liquid distribution system (100), comprising:
- a number of liquid container carriers (140), wherein each of the number of liquid container carriers (140) is adapted to carry at least one laboratory liquid container (130) containing a liquid (139),
- a transport plane (110), wherein the transport plane is adapted to support the number of liquid container carriers (140),
- a number of drive elements (120), wherein the number of drive elements (120) is adapted to move the number of liquid container carriers (140) on the transport plane (110),
- a control device (125), wherein the control device is configured to control the number of drive elements (120), such that the number of liquid container carriers (140) moves on the transport plane (110) along corresponding transport paths, and
- a detector (50) according to any one of claims 1 to 8 and/or a detector system (90) according to claim 9 and/or 10.

12. Laboratory liquid distribution system (100) according to claim 11, comprising:
- a signal receiver (126), wherein the signal receiver (126) is adapted to receive the electrical sensor signal and/or the detector signal (DS, RS) and/or the inertial sensor signal (IS),
- wherein the control device (125) is adapted to cooperate with the signal receiver (126) and is configured to control the number of drive elements (120) in dependence of the received electrical sensor signal and/or the received detector signal (DS, RS) and/or the received inertial sensor signal (IS).

13. Laboratory liquid distribution system (100) according to claim 11 or 12,
- wherein each of the number of liquid container carriers (140) comprises a magnetically active device (145),
- wherein the number of drive elements (120) comprises a number of electro-magnetic actuators (121), wherein the number of electro-magnetic actuators is stationary arranged below the transport plane (110) and is adapted to move the number of liquid container carriers (140) on the transport plane (110) by applying a magnetic drive force to the number of liquid container carriers (140), and
- wherein the control device (125) is configured to control the number of electro-magnetic actuators (121), such that the number of liquid container carriers (140) moves on the transport plane (110) along corresponding transport paths.

14. Laboratory automation system (10), comprising:
- a number of laboratory stations (20, 25), and
- a laboratory liquid distribution system (100) according to any one of claims 11 to 13, wherein the laboratory liquid distribution system (100) is adapted to distribute the number of liquid container carriers (140) and/or laboratory liquid containers (130) between the laboratory stations (20, 25).

15. Use of a detector (50) according to any one of claims 1 to 8
- with a laboratory liquid container (130) containing a liquid (139)
- in a laboratory liquid distribution system (100).
